# EUROPÄISCHE PATENTANMELDUNG

(11) **EP 0 552 395 A1**
(43) Veröffentlichungstag der Anmeldung: **28.07.1993**
(21) Anmeldenummer: 92101174.8
(22) Anmeldetag: 24.01.1992
(51) Int. Cl.: B65G 47/91

(54) **Positionierungsvorrichtung mit Greifwerkzeugen**

(71) Anmelder: Gerhard Schubert GmbH, D-74564 Crailsheim (DE)
(72) Erfinder: Haaf, Walter Dipl.-Ing., W-7180 Crailsheim (DE)
(74) Vertreter: Vogeser, Werner, Dipl.-Ing.

(57) **Zusammenfassung**

Vorrichtung zum Ergreifen von in einer Reihe linear hintereinanderliegend antransportierten, einer Übergabestation einer Verpackungs- od.dgl. -einrichtung zugeführten Gegenständen aller Art, wie insbesondere Lebens- und Genußmittelstücken u.dgl., und zum Ablegen derselben an einer vorbestimmten Stelle außerhalb der Zuführbahn der Gegenstände, bei welcher an einer horizontalen Führungsschiene (11) Greifwerkzeuge tragende Schlitten (12) längs dieser bewegbar gelagert sind, welche mittels eines Antriebselements (25) hin- und herbewegbar sind, wobei zwischen dem Antriebselement (25) und jedem einzelnen Schlitten (12) je eine Kupplung (19,20 ) angeordnet und jedem Schlitten (12) ein Wegbegrenzer (30,31,32) zugeordnet ist.

## Beschreibung

Die Erfindung betrifft eine Vorrichtung zum Ergreifen von in einer Reihe linear hintereinanderliegend antransportierten, einer Übergabestation einer Verpackungs- od.dgl. -einrichtung zugeführten Gegenständen aller Art, wie insbesondere Lebens- und Genußmittelstücken, und zum Ablegen derselben an einer vorbestimmten Stelle außerhalb der Zuführbahn der Gegenstände.

Vorrichtungen der vorerwähnen Art sind in unterschiedlichsten Bauarten bekanntgeworden. Ihre Konstruktion bringt es mit sich, daß die Greif- bzw. Saugwerkzeuge - nachstehend insgesamt als "Greifwerkzeuge" bezeichnet -, die es an vorbestimmten Stellen zu positionieren gilt, keinen so kleinen Abstand voneinander einnehmen können, wie es in der Praxis notwendig wäre, um kleinere Gegenstände ordnungsgemäß ohne weitere zusätzlichen Maßnahmen rationell zu verpacken.

Bei den bekanntgewordenen Vorrichtungen der in Betracht kommenden Art handelt es sich ausnahmslos um Spezialkonstruktionen, welche starr für einen einzigen Anwendungszweck ausgelegt sind. Zum Verschieben der Greifwerkzeuge werden Seilzüge, Zugstangen, Luftzylinder oder mechanische Kurvengetriebe verwendet, die aufwendig, kostenintensiv und überdies schwergewichtig sind und keine Verstellmöglichkeit hinsichtlich unterschiedlicher Anwendungszwecke haben.

Der Erfindung liegt somit die Aufgabe zugrunde, eine konstruktiv einfache, wenig aufwendige und störungsunanfällige Vorrichtung zu schaffen, die ein breites Anwendunsspektrum gewährleistet und die es insbesondere ermöglicht, eine Vielzahl von Greifwerkzeugen auf geringem Raum unterzubringen, mittels welcher auch kleinere Gegenstände dicht aneinanderliegend positioniert werden können.

Zur Lösung dieser Aufgabe wird gemäß der Erfindung vorgesehlagen, an einer horizontalen Führungsschiene längs dieser bewegbare Schlitten zu lagern, welche die Greifwerkzeuge tragen und welche beispielsweise mittels eines endlosen bandförmigen Antriebselements hin- und herbewegbar sind, so daß die Greifwerkzeuge zusammengerückt oder voneinander entfernt werden. Hierzu ist zwischen dem Antriebselement und einem jeden Werkzeugträgerschlitten je eine Kupplung angeordnet, die die Antriebskraft auf die Schlitten überträgt, welchen überdies Wegbegrenzer zugeordnet sind, zwischen welchen die Schlitten hin- und herbewegbar sind.

Weitere Merkmale der erfindungsgemäß ausgebildeten Vorrichtung gehen aus den Unteransprüchen wie auch aus der nachstehenden Beschreibung eines bevorzugten Ausführungsbeispiels hervor, welches in den Figuren 1 bis 3 der Zeichnungen dargestellt ist. Es zeigen:
- Fig. 1: eine Vorderansicht der horizontalen Führungsschiene, an welcher die die Greifwerkzeuge tragenden Schlitten seitlieh verschiebbar gelagert sind;
- Fig. 2: einen Schnitt durch die Führungsschiene nach Fig. 1, und
- Fig. 3: eine Aufsicht auf einen Teil der Führungsschiene nach Fig. 1.

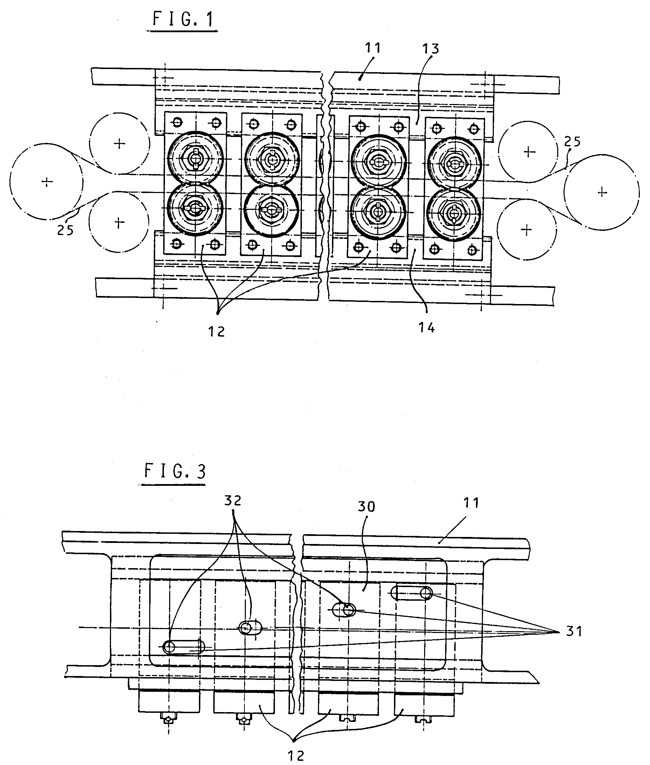

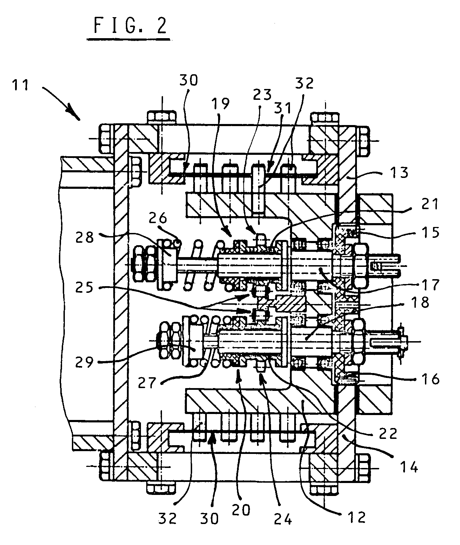

Wie insbesondere die Figuren 1 und 2 erkennen lassen, sind an der horizontal angeordneten Führungsschiene 11 die Werkzeugträgerschlitten 12 horizontal verschiebbar gelagert. Die Führungsschiene 11 hat, wie Fig. 2 zeigt, ein kastenförmiges Profil. An ihrer Vorderseite befinden sich zwei einander parallele und im Abstand voneinander angeordnete Zahnstangen 13 bzw. 14, an welchen die Schlitten 12 gelagert sind. An jedem Schlitten 12 sind übereinanderliegend die Zahnräder 15 und 16 gelagert, die mit ihrer Verzahnung in die Verzahnung der Zahnstangen 13 bzw. 14 eingreifen. Auf den Wellen 17 bzw. 18 der Zahnräder 15 und 16 sind ein- und ausschaltbare Friktionskupplungen 19 bzw. 20 gelagert, deren Kupplungshülsen 21 bzw. 22 je ein Zahnrad 23 bzw. 24 aufweisen, in welches die endlos umlaufende und über eines der Umlenkräder angetriebene Antriebskette 25 eingreift.

Die Druckfedern 26 bzw. 27 der Kupplungen 19 bzw. 20 können, je nachdem, welche der beiden Kupplungen 19 oder 20 eingeschaltet bzw. für den Antrieb aktiviert werden soll, dadurch gespannt oder entspannt werden, daß ihr Federwiderlager 28 oder 29 axial verschoben und arretiert wird.

An der Führungsschiene 11 sind auswechselbare Schablonen 30 befestigt, die, wie aus Fig. 3 ersichtlich, Schlitze 31 aufweisen, in die an den Schlitten 12 sitzende Anschlagzapfen 32 eingreifen, durch welche der Verschiebeweg der einzelnen Schlitten 12 begrenzt wird.

Jeder Schlitten 12 ist mit einem Anschlagzapfen 32 ausgestattet, der in den diesem zugeordneten Wegbegrenzungsschlitz 31 in der Schablone 30 hineinragt.

Zweckmäßigerweise bestimmt man einen Werkzeugträgerschlitten 12, der gegenüber der Führungsschiene 11 eine feste, unveränderliche Position einnimmt. Der Anschlagzapfen 32 dieses Schlittens 12 greift daher in ein Loch ein; weiterhin sind dessen beide Friktionskupplungen 19 und 20 ausgeschaltet. Befindet sich nun der unbewegliche Schlitten an einem Ende der Schlittenreihe, müssen die anderen Schlitten von dem unbeweglichen Schlitten aus nach der einen oder nach der anderen Seite hin bewegt werden. Dementsprechend werden nur die oberen oder nur die unteren Friktionskupplungen der einzelnen, zu bewegenden Schlitten eingeschaltet.

Wird aber der in der Mitte der Schlittenreihe befindliche Schlitten als fester Schlitten bestimmt, so sind die links bzw. rechts von diesem liegenden Schlitten nach links bzw. nach rechts zu bewegen. Hierzu sind bei den linken Schlitten (je nach der Bewegungsrichtung der Antriebskette) entweder die oberen oder die unteren Friktionskupplungen einzuschalten, während dies bei den rechten Schlitten umgekehrt der Fall ist.

Die an der Führungsschiene 11 befestigten Wegbegrenzungsschablonen 30 sind auswechselbar gegen solche mit anders angeordneten Längsschlitzen 31 entsprechender Länge. Dadurch läßt sich die erfindungsgemäß ausgebildete Vorrichtung relativ rasch umstellen, um sie für die Verpackung anderer Gegenstände einsetzen zu können. Ihr universeller Einsatz erstreckt sich auf die Verpackung von beispielsweise Pralinen, Keksen, Mohrenköpfen, Verpackungsbeuteln unterschiedlichster Art und Größe, Gläsern, Ampullen, Werkzeugen und Geräten verschiedenster Art und Größe, wie auch von Nahrungs- und Genußmitteln u.dgl. mehr.

## Patentansprüche

1. Vorrichtung zum Ergreifen von in einer Reihe linear hintereinanderliegend antransportierten, einer übergabestation einer Verpackungs- od.dgl. -einrichtung zugeführten Gegenständen aller Art, wie insbesondere Lebens- und Genußmittelstücken u.dgl., und zum Ablegen derselben an einer vorbestimmten Stelle außerhalb der Zuführbahn der Gegenstände, dadurch gekennzeichnet, daß an einer horizontalen Führungsschiene (11) Greifwerkzeuge tragende Schlitten (12) längs dieser bewegbar gelagert sind, welche mittels eines Antriebselements (25) hin- und herbewegbar sind, wobei zwischen dem Antriebselement (25) und jedem einzelnen Schlitten (12) je eine Kupplung (19,20) angeordnet und jedem Schlitten (12) ein Wegbegrenzer (30,31,32) zugeordnet ist.

2. Vorrichtung nach Anspruch 1, dadurch gekennzeichnet, daß an jedem Werkzeugträgerschlitten (12) wenigstens ein Antriebszahnrad (15,16) gelagert ist, welches in eine an der horizontalen Führungsschiene (11) angeordnete Zahnstange (13,14) eingreift, und welches über eine Kupplung (19,20) mit einem Antriebszahnrad (23,24) von dem Antriebselement (25) bewegbar ist.

3. Vorrichtung nach Anspruch 1 oder 2, dadurch gekennzeichnet, daß das Antriebselement (25) aus einer endlosen Rollenkette oder einem endlosen Zahnriemen besteht.

4. Vorrichtung nach Anspruch 1 oder 2, dadurch gekennzeichnet, daß das Antriebselement (25) aus einer Gewindespindel besteht.

5. Vorrichtung nach einem oder mehreren der Ansprüche 1 bis 4, dadurch gekennzeichnet, daß die Wegbegrenzer für die Werkzeugträgerschlitten (12) aus an diesen angeordneten Anschlagzapfen (32) sowie einer an der Führungsschiene (11) angeordneten, mit Längsschlitzen (31) versehenen Wegbegrenzerplatine (30) bestehen, in deren Schlitze (31) die Anschlagzapfen (32) eingreifen.

6. Vorrichtung nach einem der Ansprüche 1 bis 5, dadurch gekennzeichnet, daß die Kupplungen (19,20) als Friktionskupplungen ausgebildet sind.

7. Vorrichtung nach einem der Ansprüche 1 bis 5, dadurch gekennzeichnet, daß die Kupplungen (19,20) als Schaltkupplungen, insbesondere elektromagnetisch betätigte Schaltkupplungen, ausgebildet sind und jedem Werkzeugträgerschlitten (12) eine Bremsvorrichtung zugeordnet ist.
